(19) Europäisches Patentamt / European Patent Office / Office européen des brevets

(11) **EP 3 439 226 B1**

(12) **FASCICULE DE BREVET EUROPEEN**

(45) Date de publication et mention de la délivrance du brevet:
**15.06.2022 Bulletin 2022/24**

(21) Numéro de dépôt: **18187171.6**

(22) Date de dépôt: **03.08.2018**

(51) Classification Internationale des Brevets (IPC):
*H04L 9/00* *(2022.01)*   *H04L 9/32* *(2006.01)*

(52) Classification Coopérative des Brevets (CPC):
**H04W 52/0229; H04L 9/002; H04L 9/3236;**
Y02D 30/70

(54) **DISPOSITIF D'ÉMISSION/ RÉCEPTION A RADIO DE RÉVEIL RÉSISTANT AUX ATTAQUES PAR DÉNI DE SOMMEIL**

SENDE-/EMPFANGSVORRICHTUNG MIT FUNKWECKER, DIE GEGEN DENIAL-OF-SLEEP-ATTACKEN RESISTENT IST

TRANSCEIVER DEVICE WITH WAKE-UP RADIO RESISTANT TO DENIAL-OF-SLEEP ATTACKS

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **04.08.2017 FR 1757549**

(43) Date de publication de la demande:
**06.02.2019 Bulletin 2019/06**

(73) Titulaire: **Commissariat à l'énergie atomique et aux énergies alternatives**
**75015 Paris (FR)**

(72) Inventeurs:
• MONTOYA, Maxime
  38000 Grenoble (FR)
• BACLES-MIN, Simone
  38000 Grenoble (FR)
• MOLNOS, Anca
  38950 Saint-Martin-Le-Vinoux (FR)

• FOURNIER, Jacques
  38000 Grenoble (FR)

(74) Mandataire: **Brevalex**
**56, Boulevard de l'Embouchure**
**B.P. 27519**
**31075 Toulouse Cedex 2 (FR)**

(56) Documents cités:
US-A1- 2017 134 943

• FALK R ET AL: "Fighting Insomnia: A Secure Wake-Up Scheme for Wireless Sensor Networks", EMERGING SECURITY INFORMATION, SYSTEMS AND TECHNOLOGIES, 2009. SECURWARE '09. THIRD INTERNATIONAL CONFERENCE ON, IEEE, PISCATAWAY, NJ, USA, 18 juin 2009 (2009-06-18), pages 191-196, XP031516759, ISBN: 978-0-7695-3668-2

**Description**

## DOMAINE TECHNIQUE

La présente invention concerne de manière générale les dispositifs d'émission/réception à radio de réveil (*Wake Up Radio*). Elle trouve plus particulièrement application dans le domaine de l'Internet des Objets ou IoT (*Internet of Things*).

## ÉTAT DE LA TECHNIQUE ANTÉRIEURE

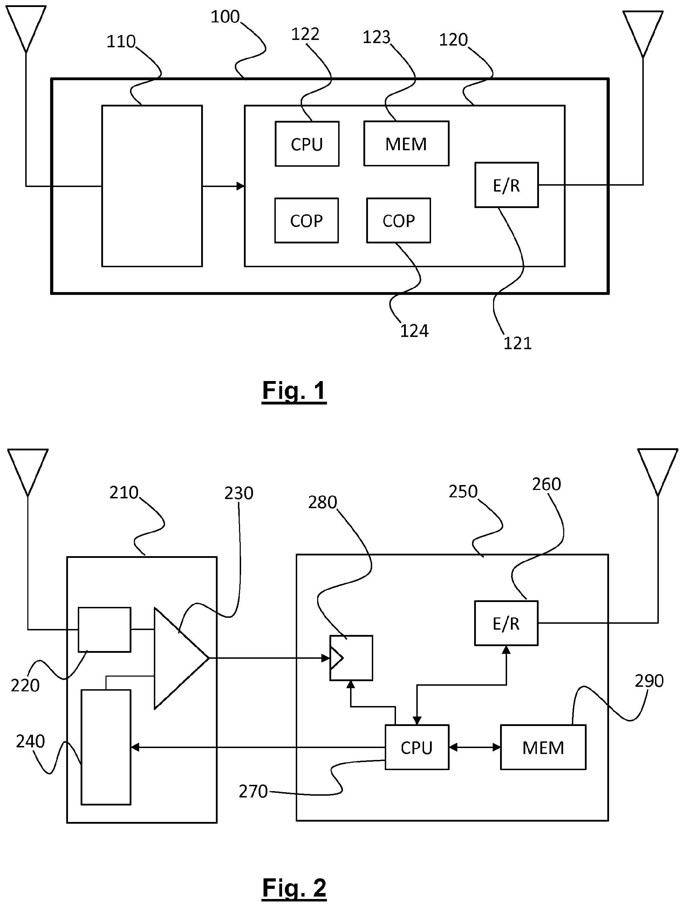

Les nœuds de l'IoT sont soumis à de fortes contraintes en termes d'autonomie. Dans de tels nœuds, l'interface radio est la partie la plus consommatrice en énergie. En effet, l'interface radio est en mode d'écoute permanente, ce qui conduit en pratique à une consommation élevée, comparable à celle qui serait observée si elle transmettait des données en permanence. Pour réduire la consommation d'énergie, il a été proposé une architecture de nœud dite à radio de réveil comme représenté en Fig.1.

La Fig. 1 représente de manière schématique la structure d'un nœud d'IoT, 100, à radio de réveil. L'essentiel des composants du nœud fait partie d'un circuit principal 120, en veille (*idle*) la majeure partie du temps. Le nœud comprend également un circuit auxiliaire 110, dit radio de réveil, dont la fonction exclusive est de détecter les messages de réveil et de faire sortir le circuit principal du mode veille lorsqu'un tel message est détecté.

La radio de réveil opère à très faible débit et consomme très peu d'énergie. Elle est active en permanence (*always on circuit*) et ne contient que des modules capables de traiter des messages de réveil.

Le circuit principal ne sort du mode veille que lorsqu'il est activé par la radio de réveil (*on demand circuit*), 110. Le circuit principal comprend notamment un circuit radio, 121, dit radio principale, chargée de la réception et de la transmission des données, un processeur CPU, 122, une mémoire 123 et, le cas échéant, un ou plusieurs coprocesseurs 124.

La radio de réveil ayant des capacités de communication et de traitement très limitées, les messages de réveil doivent être les plus simples possibles. Ainsi, un message de réveil est généralement constitué par un mot prédéfini de 8 ou 16 bits. Le message de réveil est alors identique pour tous les réveils. Dès lors, il est facile pour un tiers malveillant de capter ce message et de l'émettre en continu, ce qui a pour effet de réveiller le nœud sans arrêt et de vider rapidement sa batterie. Ce type d'attaque est appelé attaque par déni de sommeil ou DoS (*Denial of Sleep attack*).

Afin de parer aux attaques par déni de sommeil, on peut rendre le message de réveil dynamique, autrement dit le code de réveil change à chaque réveil de sorte qu'un attaquant ne peut réutiliser un code déjà utilisé (élimination des attaques par rejeu). En outre, le code de réveil ne doit pas pouvoir être prédictible par un attaquant. En effet, un attaquant ne doit pas pouvoir prédire le code de réveil suivant à partir des codes de réveil passés.

Plusieurs méthodes de réveil par code de réveil dynamique ont été proposées dans la littérature.

Une première méthode de réveil a été décrite dans l'article de R. Falk et al. intitulé « Fighting insomnia : a secure wake-up scheme for wireless sensor networks » publié dans Proc. of 3rd Int'l Conférence on Emerging Security Information, Systems and Technologies, 2009, pp. 191-196. A chaque réveil, le code du prochain réveil est transmis sur un canal sécurisé (au niveau liaison) via la radio principale. Cette méthode a pour inconvénient d'augmenter les échanges de données avec la radio principale, ce qui est coûteux en termes d'énergie.

Une seconde méthode de réveil a été décrite dans l'article d'Aljareh et al. intitulé « Efficient time synchronized one-time password scheme to provide secure wake-up authentication on wireless sensor networks » publié dans Int'l Journal of advanced smart sensor network systems (IJASSN), vol. 3, n° 1, janvier 2013. Selon cette méthode, le réveil d'un nœud B par un nœud A suppose une synchronisation de ces nœuds et l'utilisation de clés symétriques connues de ces seuls nœuds. La synchronisation des nœuds A et B nécessite de réveiller fréquemment le nœud B et de calculer le nouveau code de réveil, ce qui peut s'avérer très coûteux en énergie.

Une troisième méthode de réveil a été décrite dans l'article de A.T. Capossele et al. intitulé « Counteracting denial-of-sleep attacks in wake-up radio-based sensing systems » publié dans Proc. of 13th Annual IEEE Int'l Conf. on Sensing, Communication and Networking (SECON, 2016, pp.1-9. Cette méthode nécessite toutefois l'échange de clés symétriques secrètes (connues des seuls nœuds A et B participant à l'échange), l'utilisation de compteurs partagés ainsi que les adresses de ces deux nœuds. En pratique, l'utilisation et le maintien de compteurs partagés rend complexe la génération du code de réveil. En outre, le partage de clés symétriques (généralement sur 128 bits ou plus) est coûteux en termes de ressources: il requiert un protocole d'authentification des nœuds et un protocole d'échange sécurisé entre ceux-ci, de manière à garantir que seuls les nœuds concernés détiennent les clés en question. Ces clés doivent être ensuite maintenues secrètes, être protégées pendant toute leur durée de vie et mises à jour de manière sécurisée, ce qui très contraignant tant en matière de sécurité que de consommation en énergie.

La demande US2017/0134943 décrit un dispositif d'émission/réception à radio de réveil dans lequel le code de réveil est obtenu à partir d'un identifiant de récepteur au moyen d'une fonction à sens unique, HMAC.

Le but de la présente invention est par conséquent de proposer un dispositif d'émission/réception à radio de réveil qui ne présente pas les inconvénients précités, à savoir un dispositif d'émission/réception qui soit à la fois résistant aux attaques par déni de sommeil et qui utilise une méthode de réveil simple, sans échanges radio coûteux en énergie et sans stockage important de clés secrètes.

## EXPOSÉ DE L'INVENTION

La présente invention concerne un dispositif d'émission/réception à radio de réveil telle que définie dans la revendication 1. Des modes de réalisation avantageux sont donnés dans les revendications dépendantes.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

La Fig. 1, déjà décrite, représente de manière schématique l'architecture d'un nœud d'IoT à radio de réveil ;
La Fig. 2 représente de manière schématique un dispositif d'émission/réception à radio de réveil selon un mode de réalisation de l'invention ;
La Fig. 3 représente de manière schématique un chronogramme des échanges entre un premier nœud d'IoT et un second nœud d'IoT, équipé du dispositif de la Fig. 2.

## EXPOSÉ DÉTAILLÉ DE MODES DE RÉALISATION PARTICULIERS

On considérera dans la suite un couple de nœuds A et B d'un réseau IoT, le nœud A prenant l'initiative d'une communication avec le nœud B. On suppose que le nœud A est éveillé en permanence. Le nœud B est équipé d'un dispositif d'émission/réception comprenant un circuit auxiliaire ou radio de réveil, alimenté en permanence, et un circuit principal, en veille par défaut, mais pouvant être activé par la radio de réveil lorsque le circuit auxiliaire détecte un code de réveil. Typiquement, le nœud A pourra être une station de base alimentée par le secteur et le nœud B un objet connecté, contraint en ressources et alimenté par batterie.

On supposera que les messages de données échangés entre le nœud A et le nœud B via la radio principale le sont via une communication sécurisée. Plus précisément, ces messages sont chiffrés et, de préférence, authentifiés. Par message, on entend dans la suite un message utile, c'est-à-dire une séquence de paquets de données, voire la charge utile contenue dans ces paquets. Ainsi, un message de contrôle (management frame par exemple) ne pourra être qualifié de message utile. Lorsqu'un message est transmis via la communication sécurisée, ce message (séquence de données ou charge utile) est chiffré au moyen d'un algorithme de chiffrement symétrique ou asymétrique.

La plupart des protocoles de communication pour l'IoT tels que IEEE 802.15.4 (sur lequel sont basés les protocoles Zigbee et 6LoWPAN), ou encore LoRa, Sigfox, Bluetooth Smart (anciennement Bluetooth Low Energy) permettent une telle communication sécurisée.

La Fig. 2 représente de manière schématique un dispositif d'émission/réception à radio de réveil, 200, selon un mode de réalisation de l'invention.

On a représenté en 210 le circuit auxiliaire implémentant la radio de réveil et en 250 le circuit principal du nœud B.

Le circuit auxiliaire comprend un module de réception, 220, relié en entrée à une antenne et en sortie à la première entrée d'un comparateur 230. Le module de réception reçoit le signal d'antenne et le convertit en continu en un message numérique, le message se décalant d'un bit à chaque coup d'horloge d'échantillonnage. La seconde entrée du comparateur est reliée à un registre 240 du circuit auxiliaire, ledit registre ayant un nombre de bits égal à celui du code de réveil. Le comparateur compare bit à bit le message numérique reçu et le contenu du registre. En d'autres termes, le comparateur effectue une corrélation glissante entre le train de bits reçus et le contenu du registre.

La sortie du comparateur est reliée au circuit principal pour fournir le signal de réveil. Ce signal de réveil commute par exemple l'état d'une bascule 280 du circuit principal, cet état indiquant si le circuit principal est en veille ou actif (c'est-à-dire alimenté).

Le circuit principal 250 comprend un module d'émission/réception 260 correspondant à la radio principale et au moins un processeur 270. Le processeur est programmé pour effectuer des opérations de déchiffrement des messages reçus de la radio principale et pour calculer le prochain code de réveil (Wake Up Token), $WUT_{n+1}$ à partir au moins d'un message, $Message_{n,k}$, reçu de ou transmis au nœud A , au moyen de la radio principale, depuis le réveil par le dernier code de réveil, $WUT_n$, transmis par le nœud A. La notation $Message_{n,k}$ signifie conventionnellement ici qu'il s'agit du $k^{ème}$ message échangé entre les nœuds A et B après le $n^{ème}$ réveil du nœud B .

Alternativement, le calcul du prochain code de réveil peut être effectué par un circuit hardware dédié (ASIC ou FGPA par exemple), ce qui permet de réduire encore la consommation d'énergie.

Le message utilisé pour le calcul du code $WUT_{n+1}$ peut être par exemple le premier message ($Message_{n,1}$) reçu par le nœud A après le $n^{ème}$ réveil du circuit principal, voire le dernier message ($Message_{n,K}$) reçu par ce nœud avant qu'il ne repasse à l'état de veille. Alternativement, il peut résulter de la concaténation de plusieurs messages reçus sur la radio principale depuis le $n^{ème}$ réveil par le code $WUT_n$.

Le code $WUT_{n+1}$ peut être obtenu par :

$$WUT_{n+1} = F_{\rightarrow}\left(Message_{n,k}\right) \tag{1}$$

où la fonction $F_{\rightarrow}(.)$ est une fonction à sens unique (*one-way function*). On rappelle qu'une fonction à sens unique est une fonction dont l'inverse n'est pas calculable dans un temps polynomial. Cette fonction à sens unique pourra être par exemple une opération d'exponentiation avec un grand nombre (sur le groupe multiplicatif d'un corps fini), une multiplication par un très grand nombre, ou une fonction de hachage cryptographique, voire encore une combinaison de plusieurs de ces opérations. Le cas échéant, on pourra en outre appliquer une troncation au résultat pour obtenir un mot de la taille souhaitée (par exemple mot de 32 bits).

Le code $WUT_{n+1}$ pourra être obtenu à partir d'au moins un message $Message_{n,k}$ combiné avec le code de réveil précédent $WUT_n$, autrement dit :

$$WUT_{n+1} = F_{\rightarrow}\left(C\left(WUT_n, Message_{n,k}\right)\right) \tag{2}$$

où C est une fonction de combinaison. Selon la présente invention, le code de réveil est obtenu au moyen de :

$$WUT_{n+1} = F_{\rightarrow}\left(WUT_n \| Message_{n,k}\right) \tag{3}$$

où .||. représente l'opération de concaténation.

En lieu et place d'un seul message, $Message_{n,k}$, échangé avec (reçu ou envoyé) le nœud A, le calcul du code de réveil suivant $WUT_{n+1}$ peut faire intervenir plusieurs messages $Message_{n,k}$, $1 \leq k \leq K$, échangés avec le nœud B lors des communications sécurisées initiées par les réveils précédents.

Le mode de calcul selon l'expresssion (3) présente l'avantage d'être récursif. Ainsi, à supposer même que deux messages identiques soient envoyés à deux réveils différents ( $Message_{n+1,k}$ = par exemple), les codes de réveil obtenus différeront. Même si un attaquant réussit à avoir accès aux clés de chiffrement de la communication sécurisée, il lui faudrait accéder à l'ensemble des précédents réveils pour déterminer le prochain code de réveil. Le prochain code de réveil du nœud B est donc impossible à prédire sans connaitre la clé de chiffrement de la radio principale et l'historique de ses codes de réveil.

Le calcul du prochain code de réveil peut faire intervenir en outre un message précédemment échangé sous forme sécurisée via la radio principale un numéro de compteur. Dans ce cas, les expressions (1) à (3) deviennent :

$$WUT_{n+1} = F_{\rightarrow}\left(Message_{n,k} \| n\right) \tag{4}$$

$$WUT_{n+1} = F_{\rightarrow}\left(C\left(WUT_n, Message_{n,k}, n\right)\right) \tag{5}$$

$$WUT_{n+1} = F_{\rightarrow}\left(WUT_n \| Message_{n,k} \| n\right) \tag{6}$$

où le compteur a été pris ici égal au compteur du nombre de réveils.

Dans les expressions (2)-(3) et (5)-(6), du fait de la récursivité, le premier code de réveil doit être connu des nœuds A et B. Pour ce faire, le code de réveil est initialisé après l'échange du matériel cryptographique (clés secrètes, vecteur d'initialisation, identifiants, adresses, etc.) nécessaire à l'établissement d'une communication sécurisée entre les nœuds A et B. Le premier code de réveil peut alors être déterminé en chiffrant avec les clés préalablement échangées une information prédéterminée, par exemple un message prédéterminé connu à l'avance des nœuds du réseau, dans la mesure où le message chiffré sera impossible à prédire pour un attaquant ne disposant pas de ces clés secrètes. Par exemple, si tous les nœuds utilisent des clés différentes, le code de réveil initial sera différent pour chaque nœud.

Quelle que soit la variante envisagée, on pourra se contenter d'utiliser seulement une partie du message ou des messages transmis sur la radio principale dans le calcul du prochain code de réveil.

Dans certains protocoles, notamment IEEE 802.15.4, Bluetooth Smart, utilisant un mode de chiffrement AES pour du chiffrement authentifié tel que le mode CCM, un MAC (*Message Authentication Code*) est calculé pour chaque message, à partir de la charge utile du message et d'autres données du paquet radio, puis est chiffré et rajouté au paquet envoyé. Le code MAC peut alors être utilisé en tant que partie de message comme argument dans les expressions (3) et (6). L'avantage d'utiliser le code MAC est que celui-ci est de plus petite taille et moins répétitif que les messages eux-mêmes dans la mesure où il intègre des informations telles que le nombre de messages échangés ou les adresses des nœuds.

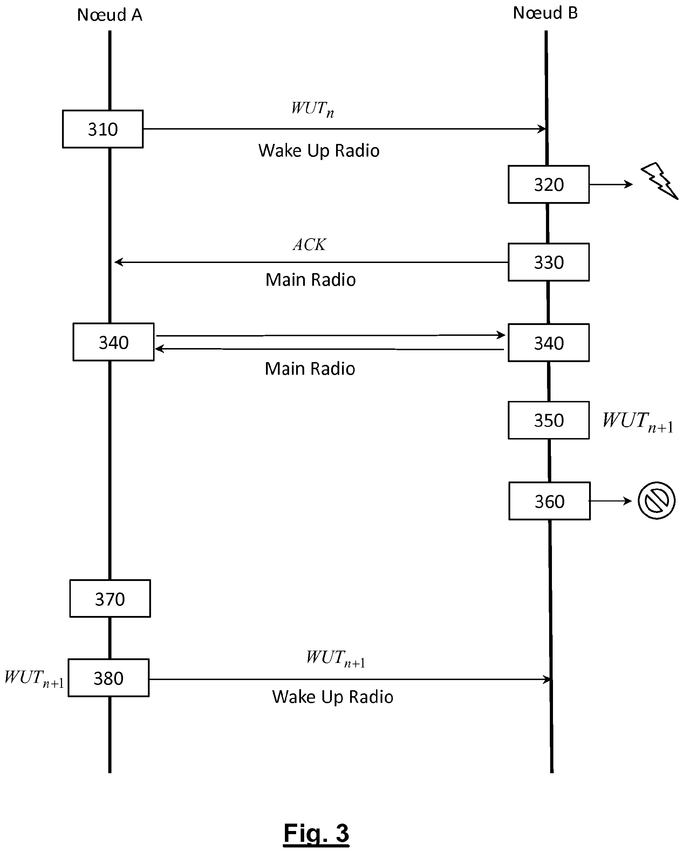

La Fig. 3 représente de manière schématique un chronogramme des échanges entre les nœuds A et B précités, entre deux réveils consécutifs du nœud B.

On suppose qu'un échange de matériel cryptographique a été effectué entre les nœuds A et B, et que le code de réveil a été préalablement initialisé. Le matériel cryptographique permet d'établir une communication sécurisée entre les deux nœuds sur la radio principale.

On suppose qu'au départ, le nœud B est à l'état de veille, autrement dit que son circuit principal n'est pas actif. En revanche, son circuit auxiliaire est alimenté en permanence mais sa consommation est minime en raison du très faible nombre de composants qu'il contient.

A l'étape 310, le nœud A souhaite initier un échange de données avec le nœud B et lui transmet pour ce faire un code de réveil $WUT_n$.

Ce code de réveil a été préalablement stocké dans le registre du circuit auxiliaire. Le circuit auxiliaire du nœud B compare le code de réveil reçu du nœud A avec le code de réveil stocké dans son registre et, après avoir détecté leur identité, active le circuit principal en 320.

A l'étape 330, le nœud B renvoie un acquittement au nœud A sur la radio principale, au moyen de la communication sécurisée, comme quoi il est passé à l'état actif.

A l'étape 340, les nœuds A et B échangent des messages de données sur la voie principale, au moyen de la communication sécurisée.

Au terme de l'échange, à l'étape 350, le circuit principal du nœud B calcule le prochain code de réveil selon l'expression (2)-(3) ou (5)-(6). On notera cependant que selon la variante (calcul à partir du premier message reçu ou transmis après le réveil), le calcul du prochain code de réveil peut intervenir avant la fin de l'échange.

Selon un exemple typique d'implémentation, le processeur du circuit principal calcule le prochain code de réveil au moyen de :

$$WUT_{n+1} = trunc\left[ hash\left( WUT_n \| Message_{n,k} \right) \right] \qquad (7)$$

La fonction de hachage *hash* peut être une fonction de la famille SHA-2 (*Secure Hash Algorithm*), en particulier la fonction SHA-256. L'opération de troncation *trunc* peut être par exemple une troncation sur 32 bits. Le message $Message_{n,k}$ peut être par exemple le dernier message échangé ou une partie de celui-ci.

Le prochain code de réveil est stocké dans le registre (de 32 bits dans l'exemple ci-dessus) du circuit auxiliaire pour permettre la détection d'un ordre de réveil.

Le circuit principal du nœud B se met ensuite à l'état de veille en 360 en commutant l'état de sa bascule.

En parallèle, le nœud A calcule le prochain code de réveil $WUT_{n+1}$ en 370. Il dispose en effet des mêmes informations que le nœud B, en l'occurrence le message $Message_{n,k}$ envoyé ou reçu par ce nœud ainsi que le code de réveil $WUT_n$ qu'il a transmis au nœud B à l'étape 310.

Il pourra ainsi ultérieurement ordonner au nœud B de se réveiller en 380 en lui transmettant, sur la radio de réveil, le code $WUT_{n+1}$ précédemment calculé.

On notera que le dispositif d'émission/réception à radio de réveil selon l'invention ne nécessite pas d'échanges additionnels par rapport aux échanges de messages de données (c'est-à-dire aux messages utiles) sur la radio principale. En d'autres termes, il n'est pas nécessaire de transmettre un message additionnel spécifique permettant d'obtenir le prochain code de réveil. Il ne nécessite pas davantage de synchronisation temporelle entre les nœuds A et B. En outre, contrairement à la plupart des solutions de l'état de la technique, la méthode de réveil proposée ne requiert pas de gérer des clés symétriques supplémentaires pour la radio de réveil, en particulier de les obtenir, les stocker et les mettre à jour, ce qui est avantageux tant en termes de consommation d'énergie que de sécurité. Enfin, lorsqu'un hachage léger (tel que *Spongent* ou *Keccak*) est utilisé comme fonction à sens unique, le calcul du prochain code de réveil par le circuit principal est particulièrement simple et la consommation d'énergie correspondant à ce calcul est très modeste, *a fortiori* lorsqu'il est effectué par un circuit hardware dédié comme mentionné plus haut.

On comprendra que d'autres types de fonction à sens unique et/ou d'autres arguments de cette fonction, utilisant les messages échangés par communication sécurisée sur la radio principale pourront être envisagés par l'homme du métier sans pour autant sortir du cadre de la présente invention.

**Revendications**

1. Dispositif d'émission/réception à radio de réveil comprenant un circuit principal (250) et un circuit auxiliaire (210), le circuit auxiliaire étant alimenté en permanence, le circuit principal étant par défaut dans un état de veille dans lequel il est non alimenté et est réveillé par le circuit auxiliaire dès lors que celui-ci détecte un code de réveil d'un nœud de réseau IoT, le circuit principal étant alimenté lorsqu'il est ainsi réveillé et établissant une communication sécurisée avec ledit nœud, **caractérisé en ce que** le circuit principal ainsi réveillé est adapté à calculer un prochain code de réveil ( $WTU_{n+1}$) en appliquant une fonction à sens unique ($F_{\rightarrow}$) sur au moins une partie d'un message utile reçu ($Message_{n,k}$) du ou transmis audit nœud via la communication sécurisée, le message utile étant constitué par la charge utile contenue dans une séquence de paquets de données, ledit message utile étant préalablement concaténé avec le dernier code de réveil, avant application de la fonction à sens unique, ledit prochain code de réveil ainsi obtenu étant fourni au circuit auxiliaire (210) pour une détection ultérieure.

2. Dispositif d'émission/réception à radio de réveil selon la revendication 1, **caractérisé en ce que** la fonction à sens unique est appliquée à au moins une partie du premier message utile reçu du ou transmis audit nœud, via la communication sécurisée, après que le circuit principal a été réveillé.

3. Dispositif d'émission/réception à radio de réveil selon la revendication 1, **caractérisé en ce que** la fonction à sens unique est appliquée à au moins une partie du dernier message utile reçu du ou transmis audit nœud, via la communication sécurisée, avant que le circuit principal retourne à l'état de veille.

4. Dispositif d'émission/réception à radio de réveil selon la revendication 2 ou 3, **caractérisé en ce que** la communication sécurisée utilise un chiffrement AES et que la fonction à sens unique est appliquée au code MAC dudit message.

5. Dispositif d'émission/réception à radio de réveil selon l'une des revendications précédentes, **caractérisé en ce que** ledit message utile est concaténé avec la sortie d'un compteur incrémenté à chaque réveil du circuit principal, avant application de la fonction à sens unique.

6. Dispositif d'émission/réception à radio de réveil selon l'une des revendications précédentes, **caractérisé en ce que** la fonction à sens unique est une fonction de hachage.

7. Dispositif d'émission/réception à radio de réveil selon la revendication 6, **caractérisé en ce que** le résultat du hachage est ensuite tronqué à un nombre prédéterminé de bits pour fournir ledit prochain code de réveil.

8. Dispositif d'émission/réception à radio de réveil selon l'une des revendications 1 à 5, **caractérisé en ce que** la fonction à sens unique est une exponentiation.

9. Dispositif d'émission/réception à radio de réveil selon l'une des revendications 1 à 5, **caractérisé en ce que** la fonction à sens unique est une multiplication.

10. Dispositif d'émission/réception à radio de réveil selon l'une des revendications précédentes, **caractérisé en ce que** le prochain code de réveil fourni par le circuit principal est stocké dans un registre (240) du circuit auxiliaire (210), avant que le circuit principal retourne à l'état de veille.

**Patentansprüche**

1. Sende-/Empfangsvorrichtung mit Weckfunk, enthaltend eine Hauptschaltung (250) und eine Hilfsschaltung (210), wobei die Hilfsschaltung permanent mit Strom versorgt wird, wobei sich die Hauptschaltung standardmäßig in einem Standby-Zustand befindet, in dem sie nicht mit Strom versorgt wird und von der Hilfsschaltung geweckt wird, sobald diese einen Weckcode von einem IoT-Netzwerkknoten erfasst, wobei die Hauptschaltung dann, wenn sie auf diese Weise geweckt wird, mit Strom versorgt wird und eine sichere Kommunikation mit dem Knoten herstellt, **dadurch gekennzeichnet, dass** die so geweckte Hauptschaltung dazu geeignet ist, einen nächsten Weckcode ($WTU_{n+1}$) zu berechnen, indem sie eine Einwegfunktion ($F_{\rightarrow}$) auf mindestens einen Teil einer Nutznachricht ($Message_{n,k}$), die über die sichere Kommunikation von dem Knoten empfangen oder an diesen übertragen wird, anwendet, wobei die Nutznachricht aus der in einer Folge von Datenpaketen enthaltenen Nutzlast besteht, wobei die Nutznachricht vor der Anwendung der Einwegfunktion zuvor mit dem letzten Weckcode verknüpft wird, wobei der so gewonnene nächste Weckcode der Hilfsschaltung (210) für eine spätere Erfassung zugeführt wird.

2. Sende-/Empfangsvorrichtung mit Weckfunk nach Anspruch 1, **dadurch gekennzeichnet, dass** die Einwegfunktion auf mindestens einen Teil der ersten Nutznachricht angewendet wird, die über die sichere Kommunikation von dem Knoten empfangen oder an diesen übertragen wird, nachdem die Hauptschaltung geweckt wurde.

3. Sende-/Empfangsvorrichtung mit Weckfunk nach Anspruch 1, **dadurch gekennzeichnet, dass** die Einwegfunktion auf mindestens einen Teil der letzten Nutznachricht angewendet wird, die über die sichere Kommunikation von dem Knoten empfangen oder an diesen übertragen wird, bevor die Hauptschaltung in den Standby-Zustand zurückkehrt.

4. Sende-/Empfangsvorrichtung mit Weckfunk nach Anspruch 2 oder 3, **dadurch gekennzeichnet, dass** die sichere Kommunikation eine AES-Verschlüsselung verwendet und dass die Einwegfunktion auf den MAC-Code der Nachricht angewendet wird.

5. Sende-/Empfangsvorrichtung mit Weckfunk nach einem der vorhergehenden Ansprüche, **dadurch gekennzeichnet, dass** die Nutznachricht mit der Ausgabe eines Zählers verknüpft wird, der bei jedem Weckvorgang der Hauptschaltung inkrementiert wird, bevor die Einwegfunktion angewendet wird.

6. Sende-/Empfangsvorrichtung mit Weckfunk nach einem der vorhergehenden Ansprüche, **dadurch gekennzeichnet, dass** die Einwegfunktion eine Hashfunktion ist.

7. Sende-/Empfangsvorrichtung mit Weckfunk nach Anspruch 6, **dadurch gekennzeichnet, dass** das Ergebnis der Hashfunktion anschließend auf eine vorbestimmte Anzahl von Bits gekürzt wird, um den nächsten Weckcode bereitzustellen.

8. Sende-/Empfangsvorrichtung mit Weckfunk nach einem der Ansprüche 1 bis 5, **dadurch gekennzeichnet, dass** die Einwegfunktion eine Exponentiation ist.

9. Sende-/Empfangsvorrichtung mit Weckfunk nach einem der Ansprüche 1 bis 5, **dadurch gekennzeichnet, dass** die Einwegfunktion eine Multiplikation ist.

10. Sende-/Empfangsvorrichtung mit Weckfunk nach einem der vorhergehenden Ansprüche, **dadurch gekennzeichnet, dass** der nächste von der Hauptschaltung bereitgestellte Weckcode in einem Register (240) der Hilfsschaltung (210) gespeichert wird, bevor die Hauptschaltung in den Standby-Zustand zurückkehrt.

**Claims**

1. Transmission/reception device with wake-up radio comprising a main circuit (250) and an auxiliary circuit (210), the auxiliary circuit being continuously powered, the main circuit by default being in an idle state in which it is not powered, and is woken up by the auxiliary circuit whenever the auxiliary circuit detects a wake-up token from an IoT network node, the main circuit being powered when it is thus woken and setting up a secure communication with said node, **characterised in that** the main circuit thus woken up is capable of calculating a next wake-up token ($WTU_{n+1}$) by applying a one-way function ($F_{\rightarrow}$) on at least part of a useful message ($Message_{n,k}$) received from or transmitted to said node through the secure communication, the useful message being constituted by the payload contained in a sequence of data packets, said useful message being concatenated beforehand with the last wake-up code, before application of the one-way function, said next wake-up token thus obtained being supplied to the auxiliary circuit (210) for subsequent detection.

2. Transmission/reception device with wake-up radio according to claim 1, **characterised in that** the one-way function is applied to at least part of the first useful message received from or transmitted to said node through the secure communication, after the main circuit has been woken up.

3. Transmission/reception device with wake-up radio according to claim 1, **characterised in that** the one-way function is applied to at least part of the last useful message received from or transmitted to said node through the secure communication, before the main circuit returns to the idle state.

4. Transmission/reception device with wake-up radio according to claim 2 or 3, **characterised in that** the secure communication uses an AES encryption and **in that** the one-way function is applied to the MAC code of said useful message.

5. Transmission/reception device with wake-up radio according to one of the preceding claims, **characterised in that** said useful message is concatenated with the output from a counter incremented at each wake-up of the main circuit, before application of the one-way function.

6. Transmission/reception device with wake-up radio according to one of the preceding claims, **characterised in that** the one-way function is a hash function.

7. Transmission/reception device with wake-up radio according to claim 6, **characterised in that** the hash result is then truncated to a predetermined number of bits to supply said next wake-up token.

8. Transmission/reception device with wake-up radio according to one of claims 1 to 5, **characterised in that** the one-way function is an exponentiation.

9. Transmission/reception device with wake-up radio according to one of claims 1 to 5, **characterised in that** the one-way function is a multiplication.

10. Transmission/reception device with wake-up radio according to one of the preceding claims, **characterised in that** the next wake-up token supplied by the main circuit is stored in a register (240) of the auxiliary circuit (210), before the main circuit returns to the idle state.

110    100    122    123    120

CPU    MEM

E/R

COP    COP

124    121

**Fig. 1**

210    230    280    250    260

E/R

220

240    290

CPU    MEM

270

**Fig. 2**

Nœud A

Nœud B

$WUT_n$

310

Wake Up Radio

320

$ACK$

330

Main Radio

340

340

Main Radio

350 $WUT_{n+1}$

360

370

$WUT_{n+1}$

$WUT_{n+1}$ 380

Wake Up Radio

**Fig. 3**

## RÉFÉRENCES CITÉES DANS LA DESCRIPTION

**Documents brevets cités dans la description**

- US 20170134943 A

**Littérature non-brevet citée dans la description**

- **R. FALK et al.** Fighting insomnia : a secure wake-up scheme for wireless sensor networks. *Proc. of 3rd Int'l Conférence on Emerging Security Information, Systems and Technologies,* 2009, 191-196
- **D'ALJAREH et al.** Efficient time synchronized one-time password scheme to provide secure wake-up authentication on wireless sensor networks. *Int'l Journal of advanced smart sensor network systems (IJASSN),* Janvier 2013, vol. 3 (1
- **A.T. CAPOSSELE et al.** Counteracting deni-al-of-sleep attacks in wake-up radio-based sensing systems. *Proc. of 13th Annual IEEE Int'l Conf. on Sensing, Communication and Networking (SECON,* 2016, 1-9